(19)

Europäisches Patentamt
European Patent Office
Office européen des brevets

(11) **EP 2 237 579 A2**

(12) **EUROPEAN PATENT APPLICATION**

(43) Date of publication:
06.10.2010 Bulletin 2010/40

(51) Int Cl.:
*H04W 4/06* (2009.01)   *H04L 5/02* (2006.01)

(21) Application number: 10170793.3

(22) Date of filing: 30.07.2007

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.07.2006 US 833940 P**
**27.07.2007 US 829750**

(62) Document number(s) of the earlier application(s) in accordance with Art. 76 EPC:
**07799917.5 / 2 055 120**

(71) Applicant: **QUALCOMM Incorporated**
**San Diego, California 92121-1714 (US)**

(72) Inventors:
• **Agashe, Parag Arun**
**San Diego, CA 92121-1714 (US)**

• **Bhushan, Naga**
**San Diego, CA 92121-1714 (US)**
• **Kadous, Tamer**
**San Diego, CA 92121-1714 (US)**
• **Sarkar, Sandip**
**San Diego, CA 92121-1714 (US)**

(74) Representative: **Bardehle, Heinz**
**Patent- und Rechtsanwälte**
**Bardehle . Pagenberg . Dost . Altenburg .**
**Geissler**
**Galileiplatz 1**
**81679 München (DE)**

Remarks:
This application was filed on 26.07.2010 as a divisional application to the application mentioned under INID code 62.

(54) **Method and apparatus for broadcast multicast service in an ultra mobile broadband network**

(57) A method and apparatus for broadcast multicast service in an ultra mobile broadband network is provided. An apparatus is provided which is operable in a wireless communication system to provide a means for mapping broadcast flows to a broadcast multicast logical channel and transmitting the broadcast multicast logic channel on an aggregation of broadcast physical channels, where each of the aggregation of the broadcast physical channels is uniquely characterized by a subband interlace multiplex triple (SIMT). Radio configurations to support the ultra mobile broadband network are also provided.

BCMCS Subband   Reserved Subband   Unicast Subband

Subzone

Interlace mod 8 in a Phy Frame

Indexing BCMCS Subbands

FIG. 3

EP 2 237 579 A2

Printed by Jouve, 75001 PARIS (FR)

**Description**

**I. Related Applications**

This application claims priority to U.S. Provisional Application No. 60/833,940, filed July 28, 2006 entitled BCMCS in UHDR-one.

**II. Field of the Invention**

The present invention relates generally to communication systems, and more specifically, to a method and apparatus for broadcast multicast service in LBC.

**III. Background**

Wireless communication technologies have seen tremendous growth in the last few years. This growth has been fueled in part by the freedom of movement offered by wireless technologies and the greatly improved quality of voice and data communications over the wireless medium. Improved quality of voice services along with the addition of data services have had and will continue to have a significant effect on the communicating public. The additional services include accessing the Internet using a mobile device while roaming and receiving broadcast or multicast services.

These wireless systems may be multiple-access systems capable of supporting communication with multiple users by sharing the available system resources (e.g., bandwidth and transmit power). Examples of such multiple-access systems include code division multiple access (CDMA) systems, time division multiple access (TDMA) systems, frequency division multiple access (FDMA) systems, 3GPP long term evolution (LTE) systems, and orthogonal frequency division multiple access (OFDMA) systems.

Generally, a wireless multiple-access communication system can simultaneously support communication for multiple wireless terminals. Each terminal communicates with one or more base stations via transmissions on the forward and reverse links. The forward link (or downlink) refers to the communication link from the base stations to the terminals, and the reverse link (or uplink) refers to the communication link from the terminals to the base stations. This communication link may be established via a single-in-single-out, multiple-in-single-out or a multiple-in-multiple-out (MIMO) system.

A MIMO system employs multiple ($N_T$) transmit antennas and multiple ($N_R$) receive antennas for data transmission. A MIMO channel formed by the $N_T$ transmit and $N_R$ receive antennas may be decomposed into $N_S$ independent channels, which are also referred to as spatial channels, where $N_S \leq min \leq \{N_T, N_R\}$. Each of the $N_S$ independent channels corresponds to a dimension. The MIMO system can provide improved performance (e.g., higher throughput and/or greater reliability) if the additional dimensionalities created by the multiple transmit and receive antennas are utilized.

A MIMO system supports a time division duplex (TDD) and frequency division duplex (FDD) systems. In a TDD system, the forward and reverse link transmissions are on the same frequency region so that the reciprocity principle allows the estimation of the forward link channel from the reverse link channel. This enables the access point to extract transmit beamforming gain on the forward link when multiple antennas are available at the access point.

For FDMA based systems, two kinds of scheduling techniques are typically employed: subband scheduling and diversity scheduling. In subband scheduling user packets are mapped to tone allocations that are confined to a narrow bandwidth. Subband scheduling may also be referred to as frequency selective scheduling (FSS). In contrast, in diversity scheduling the user packets are mapped to tone allocations that span the entire system bandwidth. Diversity scheduling may also be referred to frequency hopped scheduling (FHS).

Frequency hopping is typically employed to achieve both channel and interference diversity. Therefore, it may be desirable to perform frequency hopping within a subband with frequency selective scheduling in a broadcast or multicast environment.

In a given system, all users may or may not always benefit from FSS. Therefore, there is a need for hopping structures such that both frequency selective scheduling users and frequency hopping scheduling users can easily multiplexed within the same TTI. In addition, there is a need for radio configurations to support broadcast multicast services in an ultra mobile broadband network that allow reservation of bandwidth for broadcast services, operating flexibility depending on unicast and broadcast loads, fast switching time, and minimal wake up time for access terminals, thus improving battery efficiency.

**IV. Summary**

An embodiment provides an apparatus operable in a wireless communication system that provides a means for mapping broadcast flows to a broadcast multicast service logic channel, and also provides a means for transmitting the broadcast multicast logic channel on an aggregation of broadcast physical channels, where each of the aggregated broadcast physical channels is uniquely characterized.

Another embodiment provides a method for mapping broadcast flows to a broadcast multicast service logic channel and transmitting the broadcast multicast logic channel on an aggregation of broadcast physical layer channels, where each of the aggregated broadcast physical channels is uniquely characterized.

There is also provided a machine-readable medium comprising instructions which, when executed by a machine, cause the machine to perform the following operations: map the broadcast flows to a broadcast multicast service logical channel; and transmit the broadcast multicast logical channel on an aggregation of broadcast physical channels, where each of the aggregated broadcast physical channels are uniquely characterized.

An additional embodiment provides a processor configured to map broadcast flows to a broadcast multicast logical service channel and transmit the broadcast multicast logical service channel on an aggregation of broadcast physical cheannels, each broadcast physical channel characterized uniquely, and a memory coupled to the processor for storing data.

### V. Brief Description of the Drawings

FIG. 1 illustrates a multiple access wireless communication system according to one embodiment of the invention.

FIG. 2 is a block diagram of a communication system according to one embodiment of the invention.

FIG. 3 is a diagram of indexing BCMCS Subbands according to one embodiment of the invention.

FIG. 4 illustrates the error control block structure of the outer Reed Solomon code according to one embodiment of the invention.

FIG. 5 is the parity matrix for the (16, 12, 4) outer code, according to one embodiment of the invention.

FIG. 6 is the parity matrix for the (16, 13, 3) outer code, according to one embodiment of the invention.

FIG. 7 is the parity matrix for the (16, 14, 2) outer code, according to one embodiment of the invention.

FIG. 8 is the parity matrix for the (32, 24, 8) outer code, according to one embodiment of the invention.

FIG. 9 is the parity matrix for the (32, 26, 6) outer code, according to one embodiment of the invention.

FIG. 10 is the parity matrix for the (32, 28, 4) outer code, according to one embodiment of the invention.

FIG. 11 shows an overhead comparison of the radio configurations according to various embodiments of the invention.

FIG. 12 illustrates hierarchical modulation according to an embodiment of the invention.

FIG. 13 defines the rate sets for one 1.25 MHz subband according to one embodiment of the invention.

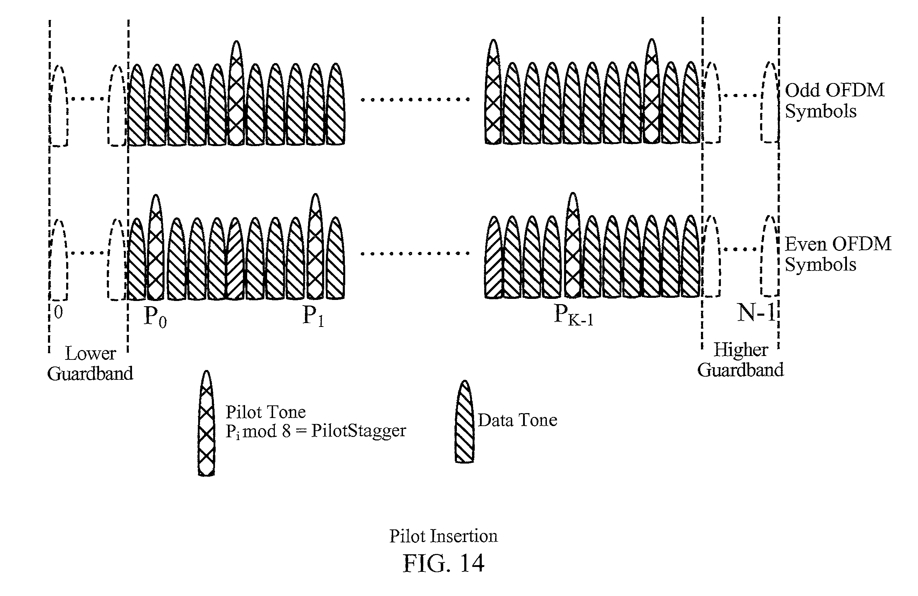

FIG. 14 illustrates pilot insertion according to one embodiment of the invention.

FIG. 15 illustrates BCMCS design structure of subband s and interlace 0, according to an embodiment of the invention.

FIG. 16 illustrates the fields of the broadcast channel information message, according to an embodiment of the invention.

FIG. 17 illustrates the interpretation of BCMCS Reserved Interlaces, according to an embodiment of the invention.

### V. Detailed Description

The word "exemplary" is used herein to mean "serving as an example, instance, or illustration". Any embodiment described herein as "exemplary" is not necessarily to be construed as preferred or advantageous over other embodiments.

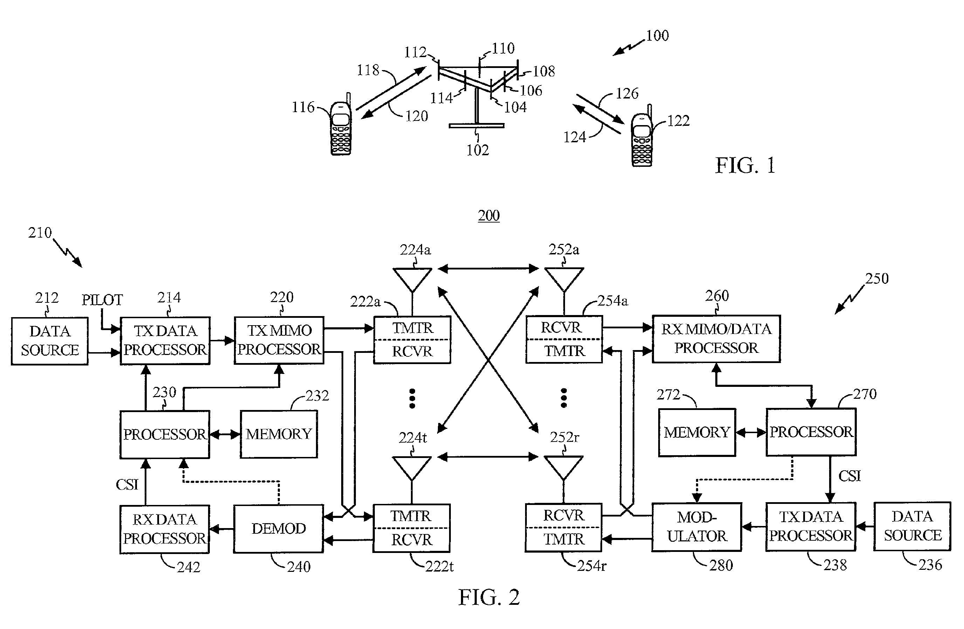

Referring to Fig. 1, a multiple access wireless communication 100 system according to one embodiment is illustrated. An access point 102 (AP) includes multiple antenna groups, one including 104 and 106, another including 108 and 110, and an additional including 112 and 114. In Fig. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal 122 is in communication with antennas 106 and 108, where antennas 106 and 108 transmit information to access terminal 122 over forward link 126 and receive information from access terminal 122 over reverse link 124. In a FDD system, communication link 118, 120, 124 and 126 may use different frequencies for communication. For example, forward link 120 may use a different frequency than that used by reverse link 118.

Each group of antennas and/or the area in which they are designed to communicate may be referred to as a sector of the access point. In an embodiment, antenna groups each are designed to communicate to access terminals in a sector, of the areas covered by access point 102.

In communication over forward link 120 and 126, the transmitting antennas of access point 102 utilize beamforming in order to improve the signal-to-noise ratio of forward links for the access terminals 116 and 124. An access point using beamforming to transmit to access terminals scattered randomly through its coverage causes less interference to access terminals in neighboring cells than an access point transmitting through a single antenna to all its access terminals.

An access point may be a fixed station used for communicating with the terminals and may also be referred to as an access point, a Node B, or some other terminology. An access terminal may also be called an access terminal, user equipment (UE), a wireless communication device, terminal, access terminal or some other terminology.

FIG. 2 is a block diagram of a MIMO system 200 including an embodiment of a transmitter system 210 (also known as the access point) and a receiver system 250 (also known as access terminal). At the transmitter system 210, traffic data for a number of data streams is provided from a data source 212 to a transmit (TX) data processor 214.

In an embodiment, each data stream is transmitted over a respective transmit antenna. TX data processor 214 formats, codes, and interleaves the traffic data for each data stream based on a particular coding scheme selected for that data stream and to provide coded data.

The coded data for each data stream may be multiplexed with pilot data using OFDM techniques. The pilot data typically is a known data pattern that is processed in a known manner and may be used at the receiver system to estimate the channel response. The multiplexed pilot and coded data for each data stream are then modulated (i.e., symbol mapped) based on the modulation scheme (e.g., BPSK, QSPK, M-PSK, or M-QAM) selected for that data stream to provide modulation symbols. The data rate, coding, and modulation for each data stream may be determined by instructions performed by processor 230. Instructions may be stored in memory 232.

The modulation symbols for all data streams are then provided to a TX MIMO processor 220, which may further process the modulation symbols depending on the modulation scheme (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. The $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210. Instructions may be stored in memory 272.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights and then processes the extracted message.

The symbol streams are then transmitted and received over channels. In an aspect, logical channels are classified into Control Channels and Traffic Channels. Logical Control Channels comprises Broadcast Control Channel (BCCH) which is DL channel for broadcasting system control information. Paging Control Channel (PCCH) which is DL channel that transfers paging information. Multicast Control Channel (MCCH) which is Point-to-multipoint DL channel used for transmitting Multimedia Broadcast and Multicast Service (MBMS) scheduling and control information for one or several Multicast Traffic Channels (MTCH). Generally, after establishing RRC connection this channel is only used by UEs that receive MBMS (Note: old MCCH+MSCH). Dedicated Control Channel (DCCH) is Point-to-point bi-directional channel that transmits dedicated control information and used by UEs having an RRC connection. In aspect, Logical Traffic Channels comprises a Dedicated Traffic Channel (DTCH) which is Point-to-point bi-directional channel, dedicated to one UE, for the transfer of user information. Also, a Multicast Traffic Channel (MTCH) is used for transmitting traffic data over a Point-to-multipoint DL channel.

In an aspect, Transport Channels are classified into DL and UL. DL Transport Channels comprises a Broadcast Channel (BCH), Downlink Shared Data Channel (DL-SDCH) and a Paging Channel (PCH), the PCH for support of UE power saving (DRX cycle is indicated by the network to the UE), broadcasted over entire cell and mapped to PHY resources which can be used for other control/traffic channels. The UL Transport Channels comprises a Random Access Channel (RACH), a Request Channel (REQCH), a Uplink Shared Data Channel (UL-SDCH) and plurality of PHY channels. The PHY channels comprises a set of DL channels and UL channels.

The downlink physical channels include the following channels: Common Pilot Channel (CPICH); Synchronization Channel (SCH); Common Control Channel (CCCH); Shared Downlink (DL) Control Channel (SDCCH); Multicast Control Channel (MCCH), Shared Uplink (UL) Assignment Channel (SUACH); Acknowledgement Channel (ACKCH); Downlink (DL) Physical Shared Data Channel (DL-PSDCH); UplinK (UL) Power Control Channel (UPCCH); Paging Indicator Channel (PICH); and Load Indicator Channel (LICH).

The Uplink (UL) Physical Channels include the following: Physical Random Access Channel (PRACH); Channel Quality Indicator Channel (CQICH); Acknowledgement Channel (ACKCH); Antenna Subset Indicator Channel (ASICH); Shared Request Channel (SREQCH); Uplink (UL) Physical Shared Data Channel (UL-PSDCH); and Broadband Pilot Channel (BPICH).

According to an aspect, the present disclosure provides BCMCS in a high data rate network. BCMCS is the short form of Broadcast and Multicast Service over an IP network. This Service may allow users to receive variety of content (e.g., video/text) on their handsets over cellular links using an Ultra Mobile Broadband system. Certain aspects of the present disclosure are discussed in more detail in the following paragraphs.

In certain embodiments, the present disclosure provides a method used in wireless communication system. Broadcast flows may be mapped to a BCMCS logic channel. The BCMCS logic channel may be transmitted on an aggregation of broadcast physical channels. Each of the aggregation of broadcast physical channels may be uniquely characterized by a SIMT (Sub-band-Interlace-Multiplex Triple).

An embodiment of the disclosure allows bandwidth reservation on the forward line. This bandwidth may be used for broadcast or multicast transmission. Broadcast multicast system (BCMCS) transmissions are indexed in units of ultra frames. Each ultraframe consists of a number of subzones and interlaces of 48 physical layer super frames.

Information about the physical location of logical channels can be obtained from an associated Broadcast Overhead Channel. Up to four Broadcast Overhead Channels are allowed per ultraframe. The set of physical channels that each Broadcast Overhead Channel addresses is denoted by Subband Group i, where i can take on values from 0 to 3. The Broadcast Overhead Channel transmitted on ultraframe contains information about the logical channels transmitted on ultraframe k + 1.

Each Subband Group i is partitioned into NumOuterframesPerUltraframe$i$ outerframes, where NumOuterframesPerUltraframe$i$ = 1, 2, 4, or 8. Each logical channel in an ultraframe is transmitted once every outerframe associated with the SubbandGroup$i$.

The smallest assignable unit is one sub-band over one interlace. This assignment is conveyed over the forward primary broadcast control channel (F-PBCCH). However, at least one sub-band on each interlace is not assigned for broadcast multicast transmission. This sub-band carries control signaling used for reverse link transmissions.

The BCMCS subbands are indexed as described below.

Over each Physical Layer frame, each group of 128 hop ports that is part of the Broadcast and Multicast services is referred to as a BCMCS subband. The location of these BCMCS subbands is advertised in the BroadcastChannelInfo message. Note that some of these hop ports may map to guard carriers, and hence not be usable for data transmission. In each ultraframe, the BCMCS subbands are indexed by UltraframeSubbandIndex are numbered from 0 to NumSubbandsPerUltraframe - 1. The physical layer frames on which BCMCS is permitted shall be numbered in increasing order with the physical layer frame that occurs earlier in time being numbered lower. If more than one BCMCS subband is present in a physical layer frame, then each of the subbands are numbered in increasing order.

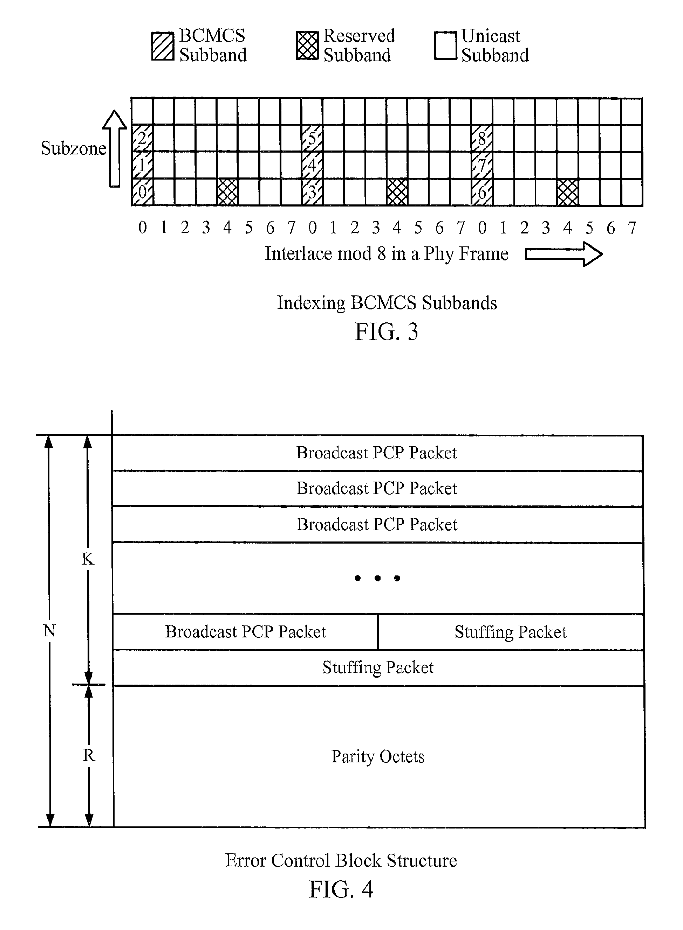

As an example, consider a 5 MHz deployment with each BCMCS subband being 128 hop ports over one physical layer frame, represented as a box in Fig. 3. The reserved subbands are represented by shaded boxes, while the BCMCS subbands are shaded boxes with an index. This index is referred to as the UltraframeSubbandIndex. In the figure, four subbands are reserved per eight interlaces, of which three are assigned to BCMCS.

On the forward link a frequency hopping pattern avoids the sub-bands that have been assigned to the broadcast multicast service. This allows the broadcast multicast transmission to utilize single frequency network operation. Neighboring sectors transmit the same signal.

The Forward Broadcast and Multicast Services Channel is particularly suitable for SFN transmissions in which all sectors in a given broadcast coverage area synchronize their broadcast transmissions and transmit the same waveform (with the exception of sector-dependent delay and complex gain) over the air during the time intervals allocated to the Broadcast Physical Layer packets. At the access terminal's antenna, all transmissions that arrive from the participating sectors combine to appear as a single transmission that goes through a multipath channel with possibly large delay spread between the first and the last arriving paths.

The physical layer utilizes two numerologies for the broadcast multicast transmission. Each deployment uses only one format. On the physical layer, tradeoffs are necessary between the need for overhead, operation at high speeds with a graceful degradation up to 350 kph, and delay spreads of up to 40 microseconds. For both numerologies, the broadcast multicast frames align line up with the physical layer frames for normal unicast transmission.

The coding and modulation on the physical layer utilize an inner rate 1/5 turbo code, which is the same as in a unicast system. The outer code relies upon Reed-Solomon code to provide time diversity for error control.

The outer Reed-Solomon code uses an error control block structure as shown in Fig. 4. An error control block is formed of N rows and MACPacketSize columns. The top K rows of the error control block contain payload from the served protocols, some of which may be stuffing packets. The bottom R = N - K rows of the error control block contain Reed-Solomon parity octets.

The payload packets on the Broadcast Logical Channel (BLC) are protected by the outer code and it is possible for each block of BLC data to have an outer code. In operation, the outer control code, described above, has a span of S ultraframes of BLC with a BOC period, N, where S is a multiple ofN. The ECB of the BLC is formed from a sequence of S consecutive ultraframes, for UF t, where $t \bmod S = 0$. If N | S, the parameters of the traffic broadcast overhead channel (BOC) change on the ECB boundaries.

A sequence of BPC packets (or erasures) on the BLC over S ultraframes is written row-wise into a matrix of R rows and C columns. Any missing entries are filled with all zero packets. For best diversity, the ultraframe hard decisions should all be buffered. Each submatrix of R rows X 1 byte is equal to the received codeword of (R, k) Reed-Solomon code and is compatible with an enhanced broadcast multicast service.

The time span of the error correction block is as follows. The minimum switching time for broadcast logical channel is proportional to the span of the ECB, which is S ultraframes. The smaller the value of S, the faster the switch may take place. Over a longer period of time the data rate of the broadcast logical channel approximates the average rate. If the broadcast logical channel is fixed for longer periods of time, overhead may be improved. S also increases the Reed-Solomon code, increasing diversity.

For non-streaming applications and longer error correction blocks are needed. While for streaming applications, shorter error correction blocks may be used in order to achieve better switching times.

Each row of the error control block forms the payload for Broadcast MAC packets for a given logical channel, which is transmitted in Broadcast Physical Layer packets assigned to the logical channel in time order at the start of transmission of the Broadcast Physical Layer packets. In effect, the error control block is a matrix of R rows and C columns where R = 1, 16, or 32. R and C are attributes of the BLC and are signaled in the broadcast channel information message described in greater detail below. Row width is determined by the sequence of the payload packets transmitted on the extended channel BCMCS (ECB).

The access network adds stuffing packets to the Broadcast PCP packets if needed to make the payload equal to K rows. These packets contain an all zero payload and are not passed to the physical layer, and thus, are not transmitted over the air.

Error control blocks are generated as described in the following paragraphs.

The access network segments the transmission on a logical channel into error control blocks (ECB). Each error control block shall begin with zero or one MAC packet received by the BCMCS MAC.

The access network then fills data into the error control block in rows. The access network applies Reed-Solomon coding along columns of the error control block. The access network transmits the error control block on the Forward Broadcast and Multicast Services Channel in rows.

Each Error Control block contains N rows and MACPacketSize columns. The top K rows of the error control block shall contain payload from the served protocols or stuffing packets. The bottom R = N - K rows of the error control block shall contain Reed-Solomon parity octets. The length of each Reed-Solomon code word shall be N octets. Each error control block shall consist of one Reed-Solomon code word.

The Reed-Solomon code is specified as a (N, K, R) code. N, K and R are defined as follows:

> N = Number of octets in a Reed-Solomon code word. The value of N shall be as defined in C.S0084-1, Physical Layer for Ultra Mobile Broadband (UMB) Air Interface Specification, incorporated herein by reference.
> K = Number of data octets in a Reed-Solomon code word. The value of K shall be as defined in C.S0084-1, Physical Layer for Ultra Mobile Broadband (UMB) Air Interface Specification, incorporated herein by reference.
> R = N - K = Number of parity octets in a Reed-Solomon code word. The value of R shall be as defined in C.S0084-1, Physical Layer for Ultra Mobile Broadband (UMB) Air Interface Specification, incorporated herein by reference.
> Each row of the error control block shall form the payload for one or more Broadcast MAC packets.
> A logical channel shall use error control blocks with the same values ofN, K, and MACPacketSize on all sectors that the access terminal is allowed to soft combine the logical channel.

The outer code is a Reed-Solomon block code that uses 8-bit symbols and operates in the Galois Field called $GF(2^8)$. The primitive element $\alpha$ for this field is defined by

$$\alpha^8 + \alpha^4 + \alpha^3 + \alpha^2 + 1 = 0.$$

The $j^{th}$ code symbol (j = 0,1,..., N - 1), vj, shall be defined by:

$$v_j = \begin{cases} u_j & 0 \le j \le K - 1 \\ \sum_{i=0}^{K-1} u_i * p_{i,j} & K \le j \le N - 1 \end{cases},$$

where
N and K are parameters of the (N, K, R) Reed-Solomon code as defined herein,
$u_j$ is the $j^{th}$ of a block of K information symbols,
$p_{i,j}$ is the entry on the $i^{th}$ row and the $j^{th}$ column in the parity matrix of the code, and
* and □ indicate multiplication and summation in GF($2^8$), respectively.
(1, 1, 0) Reed-Solomon Code
The (1, 1, 0) code generates 1 code symbol for each information symbol input to the encoder. The code symbol shall be the same as the information symbol.
(16, 12, 4) Reed-Solomon Code
The (16, 12, 4) code generates 16 code symbols for each block of 12 information symbols input to the encoder. The first 12 symbols are the information symbols and the remaining 4 symbols are parity symbols.
The generator polynomial for the (16, 12, 4) code is

$$g(X) = 1 + \alpha^{201}X + \alpha^{246}X^2 + \alpha^{201}X^3 + X^4.$$

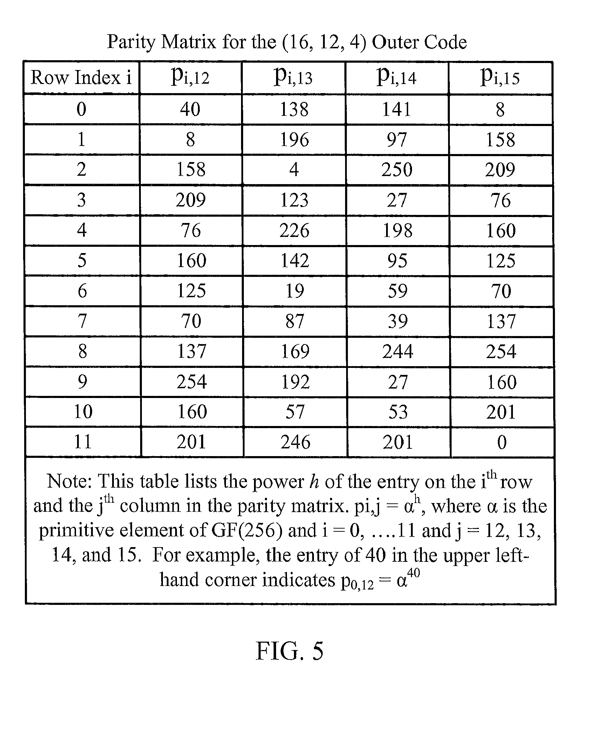

The parity matrix for the (16, 12, 4) Reed-Solomon block code shall be as specified in Fig. 5.
(16, 13, 3) Reed-Solomon Code
The (16, 13, 3) code generates 16 code symbols for each block of 13 information symbols input to the encoder. The first 13 symbols are the information symbols and the remaining 3 symbols are parity symbols.
The generator polynomial for the (16, 13, 3) code is

$$g(X) = 1 + \alpha^{197}X + \alpha^{197}X^2 + X^3.$$

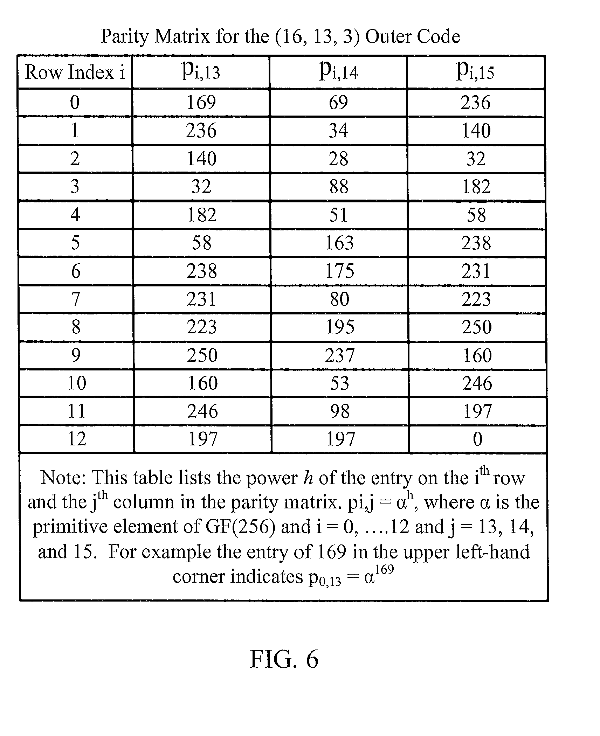

The parity matrix for the (16, 13, 3) Reed-Solomon block code shall be as specified in Fig. 6.
(16, 14, 2) Reed-Solomon Code
The (16, 14, 2) code generates 16 code symbols for each block of 14 information symbols input to the encoder. The first 14 symbols are the information symbols and the remaining 2 symbols are parity symbols.
The generator polynomial for the (16, 14, 2) code is

$$g(X) = 1 + \alpha^{152}X + X^2.$$

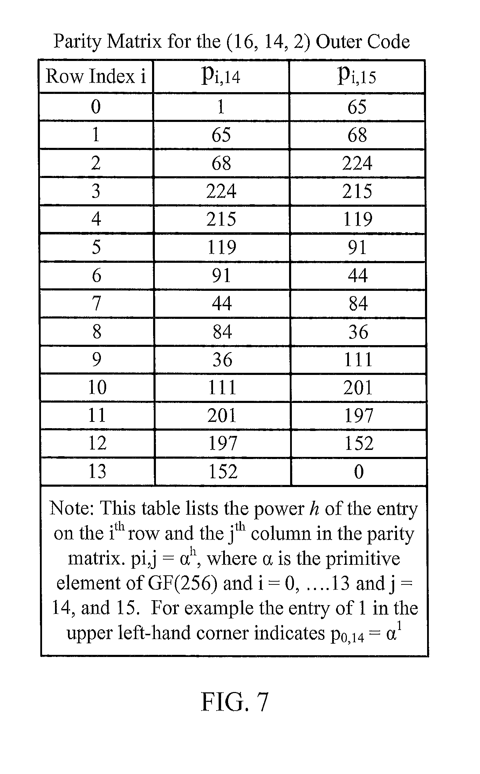

The parity matrix for the (16, 14, 2) Reed-Solomon block code shall be as specified in Fig. 7.
(32, 24, 8) Reed-Solomon Code
The (32, 24, 8) code generates 32 code symbols for each block of 24 information symbols input to the encoder. The first 24 symbols are the information symbols and the remaining 8 symbols are parity symbols.
The generator polynomial for the (32, 24, 8) code is

$$g(X) = 1 + \alpha^{44}X + \alpha^{231}X^2 + \alpha^{70}X^3 + \alpha^{235}X^4 + \alpha^{70}X^5 + \alpha^{231}X^6 + \alpha^{44}X^7 + X^8.$$

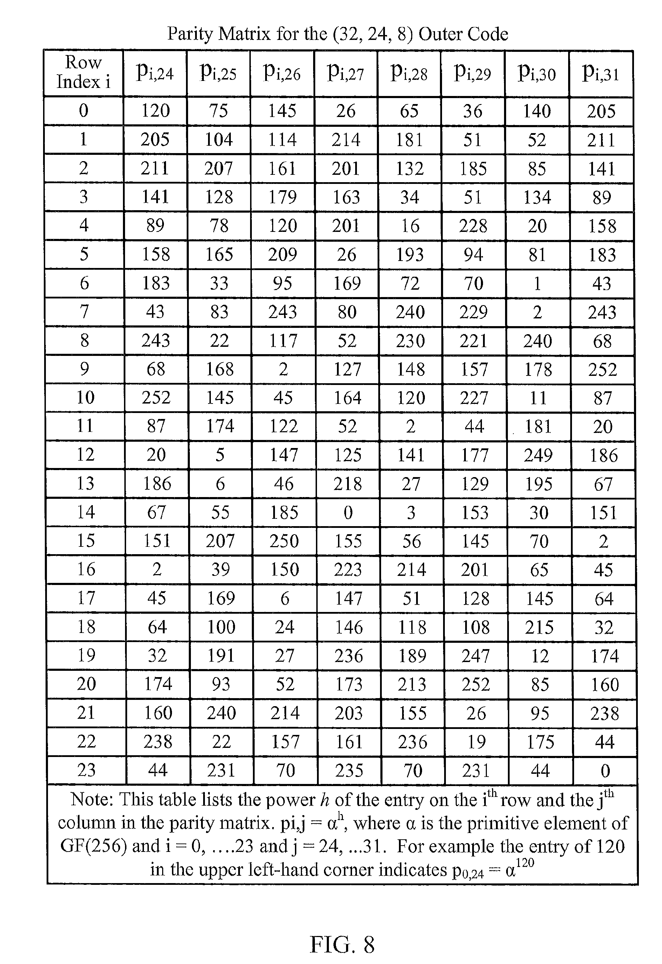

The parity matrix for the (32, 24, 8) Reed-Solomon block code shall be as specified in Fig. 8.

(32, 26, 6) Reed-Solomon Code

The (32, 26, 6) code generates 32 code symbols for each block of 26 information symbols input to the encoder. The first 26 symbols are the information symbols and the remaining 6 symbols are parity symbols. The generator polynomial for the (32, 26, 6) code is

$$g(X) = 1 + \alpha^{36}X + \alpha^{250}X^2 + \alpha^{254}X^3 + \alpha^{250}X^4 + \alpha^{36}X^5 + X^6.$$

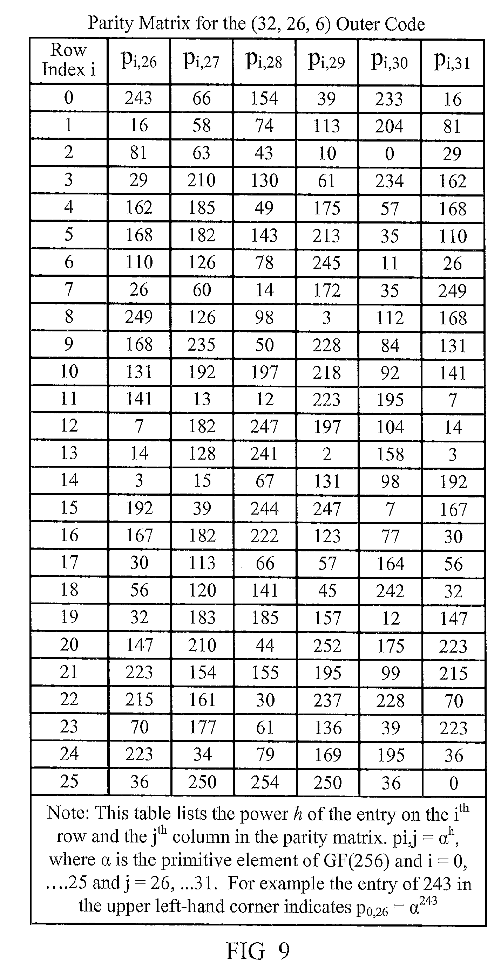

The parity matrix for the (32, 26, 6) Reed-Solomon block code shall be as specified in Fig. 9.

(32, 28, 4) Reed-Solomon Code

The (32, 28, 4) code generates 32 code symbols for each block of 28 information symbols input to the encoder. The first 28 symbols are the information symbols and the remaining 4 symbols are parity symbols.

The generator polynomial for the (32, 28, 4) code is

$$g(X) = 1 + \alpha^{201}X + \alpha^{246}X^2 + \alpha^{201}X^3 + X^4.$$

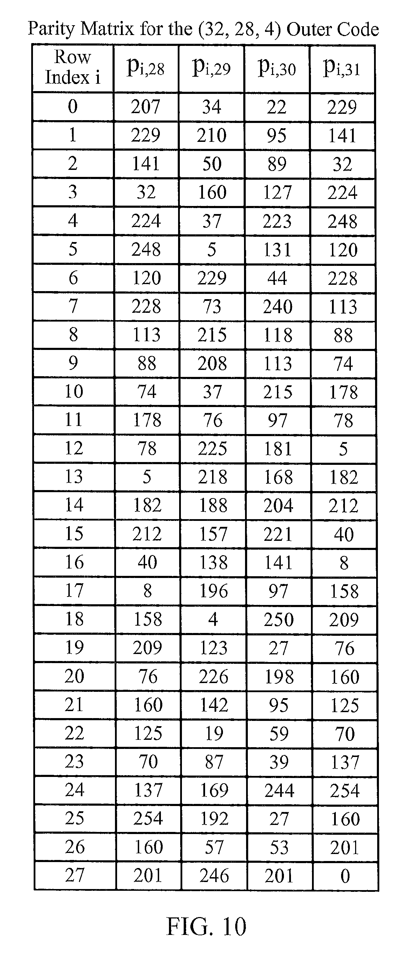

The parity matrix for the (32, 28, 4) Reed-Solomon block code shall be as specified in Fig. 10.

The physical layer also supports hierarchical modulation for different data rates depending upon the signal-to-noise ratio. Essentially, the physical layer relies on two layers of transmission, a base layer and an enhancement layer.

The terminology used in the system is defined below:

M is the number of OFDM symbols in a frame.

N is the total number of tones.

$N_G$ is the number of guard tones.

$N_u$ is the number of tones used, which equals $N - N_G$.

$N_p$ is the number of pilot tones, while $N_{GP}$ is the number of pilot tones in the guard band.

$N_d$ is the number of data tones, equal to $N_u - N_{p+} N_{GP}$,

$N_c$ is the number of chips per frame, for this system, 4480.

$N_M$ is the number of modulation symbols in a frame, equal to $M * N_d$.

$F_s$ is the sampling frequency, 4.9152 MHz.

$F_o$ is the intercarrier spacing, $F_s/N$.

$T_c$ is the chip duration, $1/F_s$ = 203.45 nanoseconds.

$T_f$ is the frame duration = 911.4 microseconds.

$T_w$ is the windowing duration ($N_w$ chips).

$T_{CP}$ is the cyclic prefix duration.

An embodiment of a radio configuration using the above parameters has the characteristics noted below:

M=7

N=512

$N_G$ = 32, $N_W$ = 16

$N_u$ = N-$N_G$= 480

$N_p$ = 64 (4 in guard tones)

$N_d$ = $N_u$ - $N_p$ = 420

$F_o$ = $F_s$/N = 9.6kHz

$T_{CP}$ = 22.78 microseconds (112 chips, approximately 17.5% overhead)

$N_M$ = M * $N_d$ = 7 * 420 = 2940

Raw Data Rate = 0.75 * Mod Order * M * $N_d$ /$T_f$;

QPSK: 4.8 Mbps

16 QAM: 9.7 Mbps
64 QAM: 14.5 Mbps

A further embodiment of a radio configuration provides for a radio configuration having a large delay spread and low Doppler shift. The characteristics of the system are given below:

$M = 3$
$N = 1280$ (256 x 5)
$N_G = 84$, $N_W = 16$
$N_u = N - N_G = 1196$
$N_p = 160$ (12 in guard interval)
$N_d = N_u - N_p = 1016$
$F_o = F_s/N = 3.8$ kHz
$T_{CP} = 39.67$ microseconds (13.2 % overhead) {197 * 2 + 198}
$N_M = M * N_d = 3048$
Raw Data Rate = 0.75 * Mod Order * M * $N_d/T_f$ :

QPSK: 5 Mbps
16 QAM: 10 Mbps
64 QAM: 15 Mbps

Yet another embodiment of a radio configuration provides for a radio configuration having a large delay spread and high Doppler shift. The characteristics of the system are given below:

$M = 6$
$N = 512$
$N_G = 32$, $N_W = 16$
$N_u = N - N_G = 480$
$N_p = 128$ (8 in guard tones)
$N_d = N_u - N_p = 360$
$F_o = F_s/N = 9.6$ kHz
$T_{CP} = 44.5$ microseconds (approximately 29.2 % overhead) {218 * 2 + 219 * 4}
$N_M = M * N_d = 2160$
Raw Data Rate = 0.75 * Mod Order * M * $N_d/T_f$ :

QPSK: 3.6 Mbps
16 QAM: 7,1 Mbps
64 QAM: 10.7 Mbps

A still further embodiment of a radio configuration provides for a small delay spread with low Doppler shift. The characteristics of the system are given below:

$M = 4$
$N = 1024$
$N_G = 64$, $N_W = 16$
$N_u = N - N_G = 960$
$N_p = 128$ (8 in guard tones)
$N_d = N_u - N_p = 840$
$F_o = F_s/N = 4.8$ kHz
$T_{CP} = 16.2$ microseconds (80 chips, approximately 7.1 % overhead)
$N_M = M * N_d = 3360$
Raw Data Rate = 0.75 * Mod Order * M * $N_d/T_f$ :

QPSK: 5.5 Mbps
16 QAM: 11 Mbps
64 QAM: 16.6 Mbps

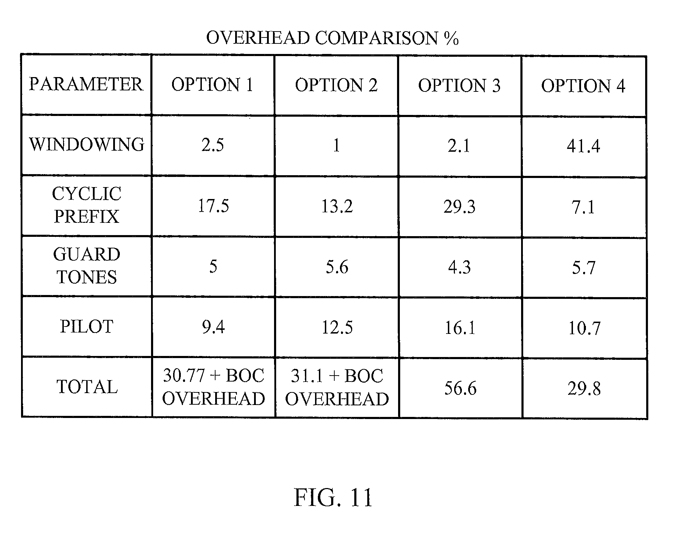

Fig. 11 provides an overhead comparison of the above described radio configurations.

9

The broadcast radio configurations described above may be modified for different unicast cyclic prefix lengths. The first and second embodiments above assume a cyclic prefix duration of approximately 6.51 micorseconds (32 chips for an FFT size of 512) for unicast OFDM symbols. If the cyclic prefix duration of the unicast OFDM symbols is larger (64, 96, or 128 chips for an FFT size of 512) then the cyclic prefix duration of the first and second radio configuration embodiments are increased appropriately so the different broadcast OFDM symbols in a frame have nearly the same cyclic prefix length, ideally, within one chip. The duration of a physical layer frame (7 OFDM symbols in the first embodiment, or 3 OFDM symbols in the second embodiment) is exactly equal to the unicast physical layer frame (8 unicast OFDM symbols).

A key component of the physical layer is the handling of coding and modulation. Rate 1/5 parallel turbo code is used for block lengths. This code is punctured to achieve the desired code rate. An outer Reed-Solomon code is used for error correction. The outer Reed-Solomon codes have been described above.

The physical layer supports a several packet formats, including QPSK, 16 QAM, and 64 QAM. In addition, the physical layer supports modulation step down and support for variable transmission rates in the time domain as well as the frequency domain, for zone based broadcast multicast service. Transition from a single frequency network-specific OFDM numerology to a unicast OFDM numerology during transmission of a given packet is also supported.

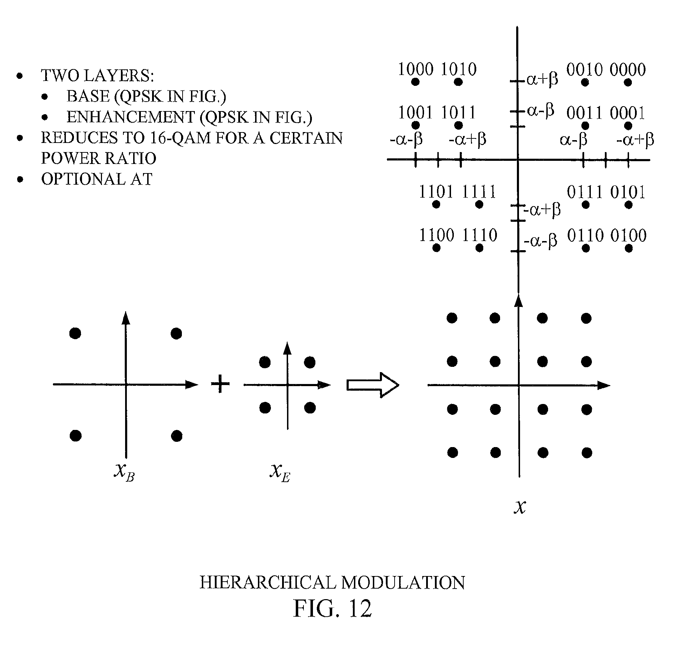

Hierarchical modulation is provided by utilizing a logical channel at the enhanced layer that is superposed on a logical channel at the base layer of the physical layer. This allows users in better reception conditions to demodulate logical channels at the higher level, rather than the base layer, thus providing improved quality. Fig. 12 illustrates hierarchical modulation.

The physical layer utilizes various rate sets and packet formats to accomplish broadcast multicast service in an ultra mobile broadband system. Two modulations have been defined, 16 QAM and QPSK. Hierarchical modulation, discussed above, is allowed. As an example of hierarchical modulation, the base layer uses 16 QAM modulation, while the optional extended layer uses QPSK modulation. Four rate sets have been defined for the base layer and the extended layer. The four rate sets apply to each proposed numerology.

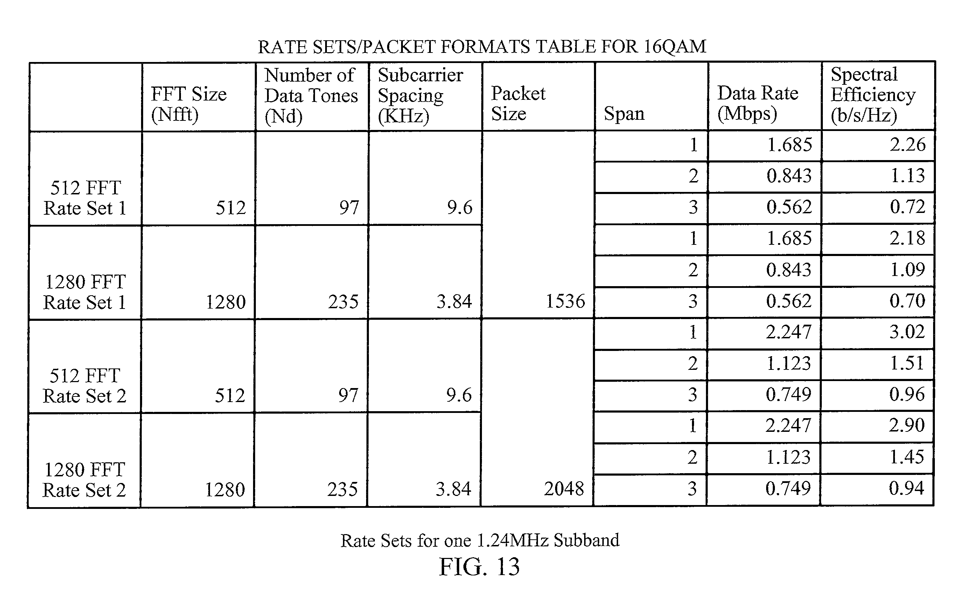

Fig. 13 defines the rate sets for one 1.25 MHz subband according to one embodiment. When multiple subbands are assigned, the packet sizes are increased proportionally and the data rates also increase.

Two numerologies are defined. A default numerology uses 512FFT and packs 7 OFDM symbols in one slot. The extended numerology provides a high delay spread, low Doppler shift, and uses 1280 FFT and packs 3 OFDM symbols in one slot. In each rate set, the packet format with the largest number of transmissions (i.e., the largest span) uses unicast numerology (512 FFT with 8 OFDM symbols per slot) in the last transmission.

The physical layer also provides for pilot insertion in the data stream. Pilot overhead is 12.5% with every eighth tone a pilot tone. Additionally, pilot insertion uses a staggering of two. The OFDM symbols in a superframe are sequentially labeled and an offset of four tones is applied to the pilot tone locations for odd symbols. A content base pilot offset (from 0 to 7) is applied to the pilot tone locations. This provides collision avoidance between pilots at the boundary between different single frequency network zones. In addition, the traffic to pilot power ratio is flexible, allowing boosting of the pilot to improve channel estimation accuracy.

The medium access control (MAC) layer works in conjunction with the physical layer to deliver the broadcast multicast service to mobile terminals desiring such service in an ultra mobile broadband system. The broadcast flows refer to specific channels, which may be local channels or global channels such as, CNN ESPN, or local programming. Additional services such as stock quotes or timetables may also be provided. Each broadcast flow is identified by a flow identifier or flow ID.

The broadcast multicast service logical channel (BLC) is a collection of flows. The MAC layer also provides broadcast physical channels (BPC). The BLCs may be sent over multiple BPCs. Each BPC may consist of a number of "consecutive" resources. A resource in this context consists of a single subband over one physical layer frame. Subbands are indexed first according to frequency and secondly according to time. This definition reduces mobile or access terminal "wake up" time and increases battery life. The access network sends the BroadcastChannelInfo message to provide the access or mobile terminal with the mapping between logical channels and the BPCs.

Logical to Physical Channel Mapping

Each Forward Broadcast and Multicast Services Channel consists of a number of BCMCS subbands as specified in the BroadcastChannelInfo message and mapped to logical channels.

A logical channel carries Broadcast PCP packets from one or more BCMCS Flows. While the same BCMCS Flow may be transmitted independently on several logical channels, the contents of a given BCMCS Flow are not split across multiple logical channels. If a BCMCS Flow is carried on more than one logical channel belonging to different sectors, the BCMCS Flow to physical channel mapping need not be the same on all those sectors. Logical channels carrying the same broadcast content may be transmitted synchronously across multiple sectors to facilitate soft combining. A logical channel associated with the Forward Broadcast and Multicast Services Channel may be transmitted synchronously across multiple sectors.

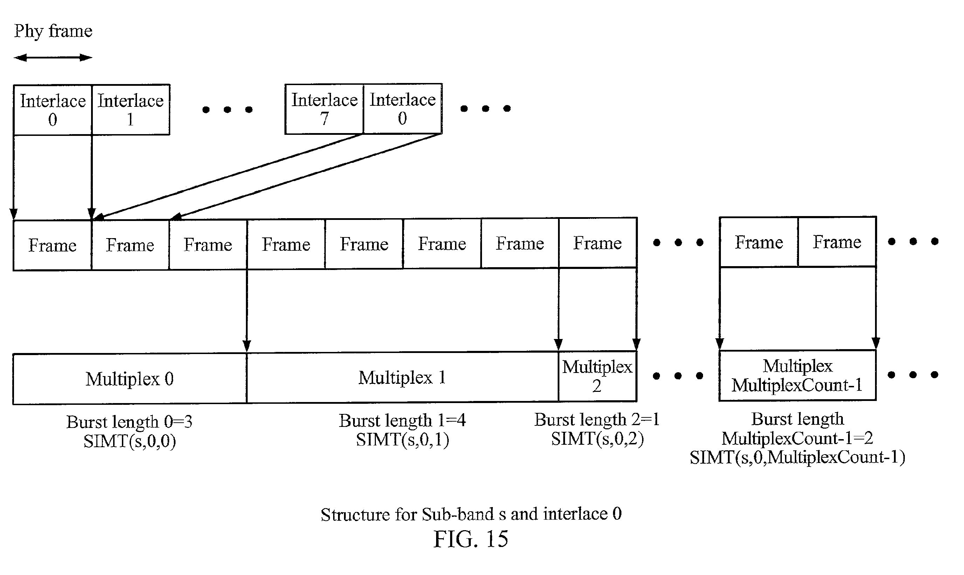

An alternate embodiment allows a BPC to be uniquely characterized by a subband-interlace multiple triple (SIMT). A SIMT is a burst length of physical layer frames on a given HARQ interlace and a given subband. The burst length differs for different SIMTs, that is, the burst length of physical layer frames in a SIMT is denoted by the burst length. Multiplexes per interlace may be 1, 2, 4, or 8 and are fixed for all interlaces. Fig. 15 illustrates BCMCS design structure of subband s and interlace 0, according to an embodiment of the invention.

The broadcast logical channel (BLC) is characterized by a scrambling sequence, a PL packet transmission format, including modulation hierarchy, and outer code parameters. Different BLCs are mapped to disjoint sets of BPCs. However, the modulation hierarchy is maintained, that is, each BLC is transmitted either as a base layer or as an enhancement layer. The result is that each BLC is transmitted modulated either QPSK or 16 QAM. BPCs with the same BLCs utilize the same PL transmission format.

For single frequency network operation, described above, for each BLC the operation is described as follows. Many BLCs map to one single frequency network. The sectors within the single frequency network transmit the BLC using the same BPCs and scrambling.

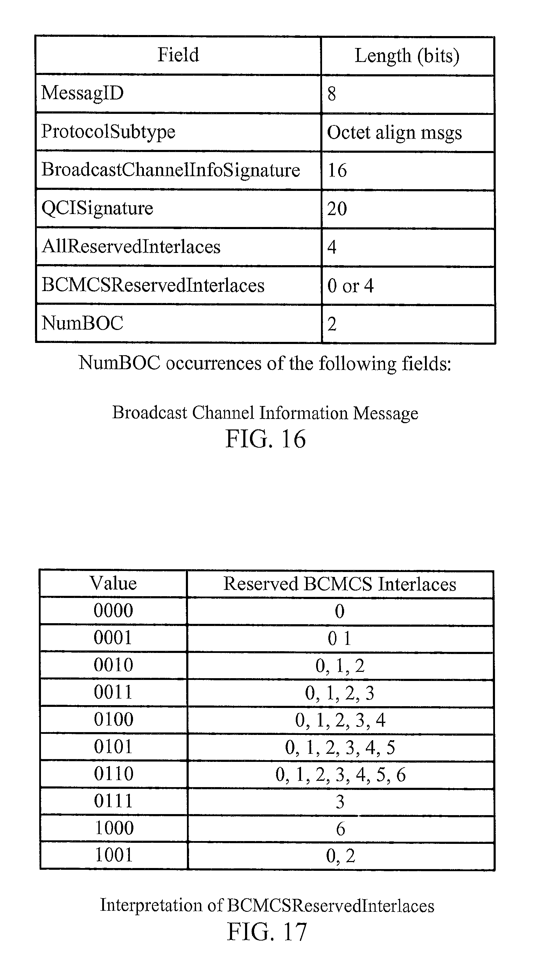

The BroadcastChannelInfo message carries information indicating the in-use PDR parameters of logical channels. The broadcast channel information message is transmitted as unicast traffic and carries BLC information. The BLC information includes: mapping between flows and BLCs, BLC transmission format, extended channel BCMCS (ECB), pilot information, including traffic to pilot ration, scrambling sequence, BPC scarring the different broadcast overhead channels (BOC), and mapping between BLCs and BOCs. All parameters in the broadcast channel information message have an expiry timer. Because of this, it is not necessary for access terminals to continuously monitor the BroadcastChannelInfo message. In addition, the BroadcastChannelInfo message is sent frequently enough for ready initial acquisition by an access terminal. Fig. 16 describes the fields in the BroadcastChannelInfo message. Further description of these fields is found below.

| | |
|---|---|
| MessageID | The access network shall set this field to 0x00. |
| ProtocolSubtype | The access network shall set this field to the constant. |
| BroadcastChannelInfoSignature | The access network shall change this field if any of the other fields in the BroadcastChannelInfo message changes. |
| QCISignature | The access network shall set this field to the QCISignature public data of the Overhead Messages protocol. |
| AllReservedInterlaces | The access network shall set this field to '1' the indicate that all the subbands of all the reserved interlaces are being used for BCMCS, else the access network shall set this field to '0'. |
| BCMCSReservedInterlaces | If the AllReservedInterlace field is set to '1', then the access network shall omit this field. Otherwise, the access network shall include this field and set it according to Fig. 17. All the subbands in these interlaces shall be used for BCMCS. |

The MAC layer transmits in ultra frames. One ultra frame is equivalent to 48 super frames. The duration of an ultra frame is approximately 1.1 seconds, with an average switching time between channels of approximately 1.7 seconds. Each ultra frame is divided into N outer frames (OF), where N = 1, 2, 4, or 8. Within each ultraframe, the BCMCS subbands are indexed as described above for BCMCS subband indexing.

Each ultraframe logically multiplexes channels. The instantaneous source rates of the individual channels vary with time, however, the aggregate payload from all channels is reasonably constant across the ultraframe. This approximation improves with larger ultraframes. Longer ultraframes can provide statistical multiplexing gain and time diversity, but at the cost of larger buffer sizes and longer latencies for audio and video decoding, as well as longer switching time.

The broadcast overhead channel (BOC) has been discussed in the context of other channels. The overhead channel provides needed information independent of the broadcast stream. Each sector of an access network can carry up to a maximum of four Broadcast Overhead Channels (BOC) as defined by the NumBOC parameter. The BOC is sent on the last one, two, four, or eight OFDM symbols of each outerframe of a subband group.

The modulation parameters of the BOC are carried in the BroadcastChannelInfo message. In addition to the BOC, each logical channel also carries in-band information about its location to the next ultraframe. In effect, the BOC is a special broadcast logical channel (BLC) that provides time diversity for reliable decoding.

The BOC is valid for the next ultraframe or until the contents are updated. The BLC configuration can be updated every N ultraframes, where N is the period of the BOC associated with the BLC. Channels carry in-band signaling for the next ultraframe. Therefore, no switching is needed and there is no need to decode the BOC, allowing for more efficient operation.

An additional mechanism to allow more efficient operation involves the use of statistical multiplexing of variable bit rate traffic on the forward broadcast and multicast services channel as described in Physical Layer for Ultra Mobile Broadband (UMB) Air Interface Specification, C.S0084-1, incorporated herein by reference. This provision applies to most broadcast multicast service channels. Statistical multiplexing follows the Law of Large Numbers. As the number of BLCs increases, the total rate moves toward an average rate. This allows statistical multiplexing to improve bandwidth efficiency. However, it should be noted that the data rate on each BLC changes significantly due to resource allocation across different BLCs, which are adjusted every BOC. Statistical multiplexing also allows for in-band signaling and provides the BLC location in the next ultraframe. This reduces wake up time for the access terminal and increases battery life.

It is understood that the specific order or hierarchy of steps in the processes disclosed is an example of exemplary approaches. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed embodiments is provided to enable any person skilled in the art to make or use the present disclosure. Various modifications to these embodiments will be readily apparent to those skilled in the art, and the generic principles defined herein may be applied to other embodiments without departing from the spirit or scope of the disclosure. Thus, the present disclosure is not intended to be limited to the embodiments shown herein but is to be accorded the widest scope consistent with the principles and novel features disclosed herein.

In the following, further examples are described to facilitate the understanding of the invention:

1. An apparatus operable in wireless communication system, the apparatus comprising:

means for mapping broadcast flows to a BCMCS logic channel; and

means for transmitting said BCMCS logic channel on an aggregation of broadcast physical channels, each of the aggregation of broadcast physical channels being uniquely characterized by a SIMT.

2. A method used in wireless communication system, the method comprising:

mapping broadcast flows to a BCMCS logic channel; and

transmitting said BCMCS logic channel on an aggregation of broadcast physical channels, each of the aggregation of broadcast physical channels being uniquely characterized by a SIMT.

3. An electronic device configured to execute the method of example 2.

4. A machine-readable medium comprising instructions which, when executed by a machine, cause the machine to perform operations including:

mapping broadcast flows to a BCMCS logic channel; and

transmitting said BCMCS logic channel on an aggregation of broadcast physical channels, each of the aggregation of broadcast physical channels being uniquely characterized by a SIMT.

5. An apparatus operable in a wireless communication system, the apparatus comprising:

a processor, configured to map broadcast flows to a BCMCS logic channel, and to transmit said BCMCS logic channel on an aggregation of broadcast physical channels, each of the aggregation of broadcast physical channels being uniquely characterized by a SIMT; and

a memory coupled to the processor for storing data.

**Claims**

1. A method of transmitting broadcast content in a wireless communication system comprising:

indexing one or more broadcast transmissions as one or more ultraframes;
providing information regarding physical location of one or more logical channels within the broadcast transmissions;
classifying a plurality of physical channels employed for transmitting the broadcasts into at least a subband group;
partitioning the subband group into one or more outerframes; and
transmitting the one or more outerframes with one or more subbands associated therewith.

2. The method of claim 1, further comprising transmitting a parameters signaling message to advertise the location of the logical channels.

3. The method of claim 1, further comprising transmitting the logical channels once for every outerframe associated with a specific subband group.

4. The method of claim 1, further comprising segmenting transmission on a logical channel into one or more error control blocks (ECBs) beginning with zero or one MAC packet received by a MAC layer.

5. The method of claim 4, wherein segmenting transmission into the one or more ECBs comprises filling in data into the one or more error control blocks, applying Reed-Salomon coding along columns of the error control blocks and broadcasting the error control blocks in one or more rows on a forward link.

6. The method of claim 1, further comprising providing a UE with the mapping between the logical channels and a starting subband by sending a mapping message to the UE.

7. The method of claim 6, wherein the mapping message of multiple Physical Layer groups addresses a single logical channel when SFN (Single Frequency Network) coverage of the subband group is different from SFN coverage of the single logical channel.

8. The method of claim 1, further comprising providing information regarding logical channels transmitted on ultraframe k+1 within one or more subband groups transmitted on ultraframe k where k is a positive integer.

9. The method of claim 8, providing information regarding the ultraframe k+1 within the ultraframe k comprises appending one or more parameters at end of a broadcast packet transmitted on the ultraframe k.

10. The method of claim 9, the broadcast packet is a non-stuffing packet.

11. An apparatus for transmitting broadcast content in a wireless communication system comprising:

means for indexing one or more broadcast transmissions as one or more ultraframes;
means for providing information regarding physical location of one or more logical channels within the broadcast transmissions;
means for classifying a plurality of physical channels employed for transmitting the broadcasts into at least a subband group;
means for partitioning the subband group into one or more outerframes; and
means for transmitting the one or more outerframes with one or more sub-bands associated therewith.

12. The apparatus of claim 11, wherein the means for transmitting signals one or more broadcast-related parameters over air interface via a parameters message.

13. The apparatus of claim 12, wherein a plurality of subbands carrying the broadcast content are mapped to one or more logical channels as specified in the parameters message.

14. The apparatus of claim 13, the means for transmitting transmits one or more broadcast packets from one or more flows in the one or more logical channels.

15. A computer readable medium having stored thereon computer executable instructions for carrying out a method of any of the claims 1 to 10 when executed.

FIG. 1

FIG. 2

EP 2 237 579 A2

BCMCS
Subband

Reserved
Subband

Unicast
Subband

Subzone

0 1 2 3 4 5 6 7 0 1 2 3 4 5 6 7 0 1 2 3 4 5 6 7

Interlace mod 8 in a Phy Frame

Indexing BCMCS Subbands

FIG. 3

| Broadcast PCP Packet | |
| Broadcast PCP Packet | |
| Broadcast PCP Packet | |
| • • • | |
| Broadcast PCP Packet | Stuffing Packet |
| Stuffing Packet | |
| Parity Octets | |

N   K   R

Error Control Block Structure

FIG. 4

Parity Matrix for the (16, 12, 4) Outer Code

| Row Index i | $p_{i,12}$ | $p_{i,13}$ | $p_{i,14}$ | $p_{i,15}$ |
|---|---|---|---|---|
| 0 | 40 | 138 | 141 | 8 |
| 1 | 8 | 196 | 97 | 158 |
| 2 | 158 | 4 | 250 | 209 |
| 3 | 209 | 123 | 27 | 76 |
| 4 | 76 | 226 | 198 | 160 |
| 5 | 160 | 142 | 95 | 125 |
| 6 | 125 | 19 | 59 | 70 |
| 7 | 70 | 87 | 39 | 137 |
| 8 | 137 | 169 | 244 | 254 |
| 9 | 254 | 192 | 27 | 160 |
| 10 | 160 | 57 | 53 | 201 |
| 11 | 201 | 246 | 201 | 0 |

Note: This table lists the power $h$ of the entry on the $i^{th}$ row and the $j^{th}$ column in the parity matrix. $p_{i,j} = \alpha^h$, where $\alpha$ is the primitive element of GF(256) and $i = 0, \ldots.11$ and $j = 12, 13, 14,$ and 15. For example, the entry of 40 in the upper left-hand corner indicates $p_{0,12} = \alpha^{40}$

FIG. 5

Parity Matrix for the (16, 13, 3) Outer Code

| Row Index i | $p_{i,13}$ | $p_{i,14}$ | $p_{i,15}$ |
|---|---|---|---|
| 0 | 169 | 69 | 236 |
| 1 | 236 | 34 | 140 |
| 2 | 140 | 28 | 32 |
| 3 | 32 | 88 | 182 |
| 4 | 182 | 51 | 58 |
| 5 | 58 | 163 | 238 |
| 6 | 238 | 175 | 231 |
| 7 | 231 | 80 | 223 |
| 8 | 223 | 195 | 250 |
| 9 | 250 | 237 | 160 |
| 10 | 160 | 53 | 246 |
| 11 | 246 | 98 | 197 |
| 12 | 197 | 197 | 0 |

Note: This table lists the power $h$ of the entry on the ith row and the jth column in the parity matrix. $p_{i,j} = \alpha^h$, where $\alpha$ is the primitive element of GF(256) and i = 0, ....12 and j = 13, 14, and 15. For example the entry of 169 in the upper left-hand corner indicates $p_{0,13} = \alpha^{169}$

FIG. 6

Parity Matrix for the (16, 14, 2) Outer Code

| Row Index i | $p_{i,14}$ | $p_{i,15}$ |
|:---:|:---:|:---:|
| 0 | 1 | 65 |
| 1 | 65 | 68 |
| 2 | 68 | 224 |
| 3 | 224 | 215 |
| 4 | 215 | 119 |
| 5 | 119 | 91 |
| 6 | 91 | 44 |
| 7 | 44 | 84 |
| 8 | 84 | 36 |
| 9 | 36 | 111 |
| 10 | 111 | 201 |
| 11 | 201 | 197 |
| 12 | 197 | 152 |
| 13 | 152 | 0 |

Note: This table lists the power $h$ of the entry on the $i^{th}$ row and the $j^{th}$ column in the parity matrix. $p_{i,j} = \alpha^h$, where $\alpha$ is the primitive element of GF(256) and $i = 0, \ldots.13$ and $j = 14$, and 15. For example the entry of 1 in the upper left-hand corner indicates $p_{0,14} = \alpha^1$

## FIG. 7

Parity Matrix for the (32, 24, 8) Outer Code

| Row Index i | $p_{i,24}$ | $p_{i,25}$ | $p_{i,26}$ | $p_{i,27}$ | $p_{i,28}$ | $p_{i,29}$ | $p_{i,30}$ | $p_{i,31}$ |
|---|---|---|---|---|---|---|---|---|
| 0 | 120 | 75 | 145 | 26 | 65 | 36 | 140 | 205 |
| 1 | 205 | 104 | 114 | 214 | 181 | 51 | 52 | 211 |
| 2 | 211 | 207 | 161 | 201 | 132 | 185 | 85 | 141 |
| 3 | 141 | 128 | 179 | 163 | 34 | 51 | 134 | 89 |
| 4 | 89 | 78 | 120 | 201 | 16 | 228 | 20 | 158 |
| 5 | 158 | 165 | 209 | 26 | 193 | 94 | 81 | 183 |
| 6 | 183 | 33 | 95 | 169 | 72 | 70 | 1 | 43 |
| 7 | 43 | 83 | 243 | 80 | 240 | 229 | 2 | 243 |
| 8 | 243 | 22 | 117 | 52 | 230 | 221 | 240 | 68 |
| 9 | 68 | 168 | 2 | 127 | 148 | 157 | 178 | 252 |
| 10 | 252 | 145 | 45 | 164 | 120 | 227 | 11 | 87 |
| 11 | 87 | 174 | 122 | 52 | 2 | 44 | 181 | 20 |
| 12 | 20 | 5 | 147 | 125 | 141 | 177 | 249 | 186 |
| 13 | 186 | 6 | 46 | 218 | 27 | 129 | 195 | 67 |
| 14 | 67 | 55 | 185 | 0 | 3 | 153 | 30 | 151 |
| 15 | 151 | 207 | 250 | 155 | 56 | 145 | 70 | 2 |
| 16 | 2 | 39 | 150 | 223 | 214 | 201 | 65 | 45 |
| 17 | 45 | 169 | 6 | 147 | 51 | 128 | 145 | 64 |
| 18 | 64 | 100 | 24 | 146 | 118 | 108 | 215 | 32 |
| 19 | 32 | 191 | 27 | 236 | 189 | 247 | 12 | 174 |
| 20 | 174 | 93 | 52 | 173 | 213 | 252 | 85 | 160 |
| 21 | 160 | 240 | 214 | 203 | 155 | 26 | 95 | 238 |
| 22 | 238 | 22 | 157 | 161 | 236 | 19 | 175 | 44 |
| 23 | 44 | 231 | 70 | 235 | 70 | 231 | 44 | 0 |

Note: This table lists the power $h$ of the entry on the $i^{th}$ row and the $j^{th}$ column in the parity matrix. $p_{i,j} = \alpha^h$, where $\alpha$ is the primitive element of GF(256) and $i = 0, \ldots 23$ and $j = 24, \ldots 31$. For example the entry of 120 in the upper left-hand corner indicates $p_{0,24} = \alpha^{120}$

FIG. 8

Parity Matrix for the (32, 26, 6) Outer Code

| Row Index i | $p_{i,26}$ | $p_{i,27}$ | $p_{i,28}$ | $p_{i,29}$ | $p_{i,30}$ | $p_{i,31}$ |
|---|---|---|---|---|---|---|
| 0 | 243 | 66 | 154 | 39 | 233 | 16 |
| 1 | 16 | 58 | 74 | 113 | 204 | 81 |
| 2 | 81 | 63 | 43 | 10 | 0 | 29 |
| 3 | 29 | 210 | 130 | 61 | 234 | 162 |
| 4 | 162 | 185 | 49 | 175 | 57 | 168 |
| 5 | 168 | 182 | 143 | 213 | 35 | 110 |
| 6 | 110 | 126 | 78 | 245 | 11 | 26 |
| 7 | 26 | 60 | 14 | 172 | 35 | 249 |
| 8 | 249 | 126 | 98 | 3 | 112 | 168 |
| 9 | 168 | 235 | 50 | 228 | 84 | 131 |
| 10 | 131 | 192 | 197 | 218 | 92 | 141 |
| 11 | 141 | 13 | 12 | 223 | 195 | 7 |
| 12 | 7 | 182 | 247 | 197 | 104 | 14 |
| 13 | 14 | 128 | 241 | 2 | 158 | 3 |
| 14 | 3 | 15 | 67 | 131 | 98 | 192 |
| 15 | 192 | 39 | 244 | 247 | 7 | 167 |
| 16 | 167 | 182 | 222 | 123 | 77 | 30 |
| 17 | 30 | 113 | 66 | 57 | 164 | 56 |
| 18 | 56 | 120 | 141 | 45 | 242 | 32 |
| 19 | 32 | 183 | 185 | 157 | 12 | 147 |
| 20 | 147 | 210 | 44 | 252 | 175 | 223 |
| 21 | 223 | 154 | 155 | 195 | 99 | 215 |
| 22 | 215 | 161 | 30 | 237 | 228 | 70 |
| 23 | 70 | 177 | 61 | 136 | 39 | 223 |
| 24 | 223 | 34 | 79 | 169 | 195 | 36 |
| 25 | 36 | 250 | 254 | 250 | 36 | 0 |

Note: This table lists the power $h$ of the entry on the $i^{th}$ row and the $j^{th}$ column in the parity matrix. $p_{i,j} = \alpha^h$, where $\alpha$ is the primitive element of GF(256) and i = 0, ....25 and j = 26, ...31. For example the entry of 243 in the upper left-hand corner indicates $p_{0,26} = \alpha^{243}$

FIG 9

Parity Matrix for the (32, 28, 4) Outer Code

| Row Index i | $p_{i,28}$ | $p_{i,29}$ | $p_{i,30}$ | $p_{i,31}$ |
|---|---|---|---|---|
| 0 | 207 | 34 | 22 | 229 |
| 1 | 229 | 210 | 95 | 141 |
| 2 | 141 | 50 | 89 | 32 |
| 3 | 32 | 160 | 127 | 224 |
| 4 | 224 | 37 | 223 | 248 |
| 5 | 248 | 5 | 131 | 120 |
| 6 | 120 | 229 | 44 | 228 |
| 7 | 228 | 73 | 240 | 113 |
| 8 | 113 | 215 | 118 | 88 |
| 9 | 88 | 208 | 113 | 74 |
| 10 | 74 | 37 | 215 | 178 |
| 11 | 178 | 76 | 97 | 78 |
| 12 | 78 | 225 | 181 | 5 |
| 13 | 5 | 218 | 168 | 182 |
| 14 | 182 | 188 | 204 | 212 |
| 15 | 212 | 157 | 221 | 40 |
| 16 | 40 | 138 | 141 | 8 |
| 17 | 8 | 196 | 97 | 158 |
| 18 | 158 | 4 | 250 | 209 |
| 19 | 209 | 123 | 27 | 76 |
| 20 | 76 | 226 | 198 | 160 |
| 21 | 160 | 142 | 95 | 125 |
| 22 | 125 | 19 | 59 | 70 |
| 23 | 70 | 87 | 39 | 137 |
| 24 | 137 | 169 | 244 | 254 |
| 25 | 254 | 192 | 27 | 160 |
| 26 | 160 | 57 | 53 | 201 |
| 27 | 201 | 246 | 201 | 0 |

FIG. 10

OVERHEAD COMPARISON %

| PARAMETER | OPTION 1 | OPTION 2 | OPTION 3 | OPTION 4 |
|---|---|---|---|---|
| WINDOWING | 2.5 | 1 | 2.1 | 41.4 |
| CYCLIC PREFIX | 17.5 | 13.2 | 29.3 | 7.1 |
| GUARD TONES | 5 | 5.6 | 4.3 | 5.7 |
| PILOT | 9.4 | 12.5 | 16.1 | 10.7 |
| TOTAL | 30.77 + BOC OVERHEAD | 31.1 + BOC OVERHEAD | 56.6 | 29.8 |

FIG. 11

- TWO LAYERS:
  - BASE (QPSK IN FIG.)
  - ENHANCEMENT (QPSK IN FIG.)
- REDUCES TO 16-QAM FOR A CERTAIN POWER RATIO
- OPTIONAL AT

HIERARCHICAL MODULATION

FIG. 12

RATE SETS/PACKET FORMATS TABLE FOR 16QAM

| | FFT Size (Nfft) | Number of Data Tones (Nd) | Subcarrier Spacing (KHz) | Packet Size | Span | Data Rate (Mbps) | Spectral Efficiency (b/s/Hz) |
|---|---|---|---|---|---|---|---|
| 512 FFT Rate Set 1 | 512 | 97 | 9.6 | | 1 | 1.685 | 2.26 |
| | | | | | 2 | 0.843 | 1.13 |
| | | | | | 3 | 0.562 | 0.72 |
| 1280 FFT Rate Set 1 | 1280 | 235 | 3.84 | 1536 | 1 | 1.685 | 2.18 |
| | | | | | 2 | 0.843 | 1.09 |
| | | | | | 3 | 0.562 | 0.70 |
| 512 FFT Rate Set 2 | 512 | 97 | 9.6 | | 1 | 2.247 | 3.02 |
| | | | | | 2 | 1.123 | 1.51 |
| | | | | | 3 | 0.749 | 0.96 |
| 1280 FFT Rate Set 2 | 1280 | 235 | 3.84 | 2048 | 1 | 2.247 | 2.90 |
| | | | | | 2 | 1.123 | 1.45 |
| | | | | | 3 | 0.749 | 0.94 |

Rate Sets for one 1.24MHz Subband

## FIG. 13

EP 2 237 579 A2

Odd OFDM
Symbols

Even OFDM
Symbols

$P_0$          $P_1$          $P_{K-1}$          N-1

Lower
Guardband

Higher
Guardband

Pilot Tone
$P_i \bmod 8 = \text{PilotStagger}$

Data Tone

Pilot Insertion

FIG. 14

Phy frame

Structure for Sub-band s and interlace 0

FIG. 15

EP 2 237 579 A2

| Field | Length (bits) |
|---|---|
| MessagID | 8 |
| ProtocolSubtype | Octet align msgs |
| BroadcastChannelInfoSignature | 16 |
| QCISignature | 20 |
| AllReservedInterlaces | 4 |
| BCMCSReservedInterlaces | 0 or 4 |
| NumBOC | 2 |

NumBOC occurrences of the following fields:

Broadcast Channel Information Message

## FIG. 16

| Value | Reserved BCMCS Interlaces |
|---|---|
| 0000 | 0 |
| 0001 | 0 1 |
| 0010 | 0, 1, 2 |
| 0011 | 0, 1, 2, 3 |
| 0100 | 0, 1, 2, 3, 4 |
| 0101 | 0, 1, 2, 3, 4, 5 |
| 0110 | 0, 1, 2, 3, 4, 5, 6 |
| 0111 | 3 |
| 1000 | 6 |
| 1001 | 0, 2 |

Interpretation of BCMCSReservedInterlaces

## FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 83394006 P